# EUROPEAN PATENT SPECIFICATION

(11) **EP 2 819 459 B1**
(45) Date of publication and mention of the grant of the patent: **10.10.2018**
(21) Application number: 13738270.1
(22) Date of filing: 18.01.2013
(51) Int. Cl.: H04W 36/00, H04W 76/30, H04W 36/04, H04W 84/04, H04W 88/08, H04W 88/16

(54) **UE CONTEXT RELEASE METHOD, ENB AND HOME ENB GATEWAY**
FREIGABEVERFAHREN FÜR EINEN BENUTZEREINHEITENKONTEXT, ENB UND HEIM-ENB-GATEWAY
PROCÉDÉ DE LIBÉRATION DE CONTEXTE D'UE, PASSERELLE D'ENB ET D'ENB DOMESTIQUE

(30) Priority: 18.01.2012 CN 201210015449
(43) Date of publication of application: 31.12.2014
(73) Proprietor: ZTE Corporation, Shenzhen, Guangdong 518057 (CN)
(72) Inventor: HUANG, YING, Shenzhen, Guangdong 518057 (CN); XI, JIN, Shenzhen, Guangdong 518057 (CN); ZHU, JIANJIAN, Shenzhen, Guangdong 518057 (CN)
(74) Representative: Novagraaf Technologies
(86) International application number: PCT/CN2013/070690
(87) International publication number: WO 2013/107385

(56) References cited:
- WO-A1-2011/137858
- CN-A- 102 238 668
- CN-A- 102 244 905
- ZTE: "Optimization for UE context release in HeNB GW", 9 September 2011 (2011-09-09), 3GPP DRAFT; R3-112184, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050541808, [retrieved on 2011-09-09] * page 1, paragraph 2 - page 3; figures 1,2 *
- ALCATEL-LUCENT: "Reduction of HeNB/HeNB GW Signalling", 3GPP DRAFT; R3-112570_REDUCESIGHENB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Zhuhai; 20111010, 30 September 2011 (2011-09-30), XP050542212, [retrieved on 2011-09-30]
- ALCATEL-LUCENT: "Reduction of HeNB/HeNB GW Signalling", 3GPP DRAFT; R3-112571_REDUCESIGHENBCRR11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Zhuhai; 20111010, 30 September 2011 (2011-09-30), XP050542213, [retrieved on 2011-09-30]
- V Srinivasa Rao ET AL: "Interoperable UE Handovers in LTE", , 1 September 2011 (2011-09-01), XP055205064, Retrieved from the Internet: URL:http://go.radisys.com/rs/radisys/image s/paper-lte-interoperable.pdf [retrieved on 2015-07-28]

## Description

### Technical Field

The present invention relates to the field of communications, in particular, to a UE context release method of a gateway, an eNB and a home eNB gateway.

### Background

A home eNB is called HeNB in an LTE (Long Term Evolution) system. The functions supported by the HeNB are substantially consistent to that supported by the macro eNB (also referred to as eNB for short), and the process between the HeNB and an EPC (Evolved Packet Core) is substantially consistent to that between the eNB and the EPC. Since the deployment of an HeNB generally has not experienced network planning of a mobile operator, the coverage range of an HeNB is small, and the amount of HeNBs is large, in order to manage and support a larger amount of HeNBs more conveniently, under an E-UTRAN (Evolved UMTS Terrestrial Radio Access Network) architecture, it is also possible to introduce a new network element HeNB GW (Home eNB gateway) between the S1 connection of the HeNB and the EPC. In R10, an HeNB can be connected with an MME (Mobility Management Entity) as an S1 proxy via an HeNB GW.

In LTE R10, an X2 direct interface exists between HeNBs, and load balance, handover optimization, information exchange, etc. can be performed via the X2 interface; that is, if an X2 interface exists between a source HeNB and a target HeNB, an X2 handover procedure can be adopted between the HeNBs. When the handover is finished, the source HeNB sends an S1AP UE context release message (S1 UE context release request message), wherein the message carries GW Context Release Indication IE (UE context release indication for a home eNB gateway), so as to indicate the HeNB GW of the source HeNB to release the context of the handover UE. If the source HeNB establishes an S1 interface with the MME via the HeNB GW (Gateway), the S1AP message (SI UE context release request message) is firstly received by the HeNB GW, the HeNB GW parses the GW context release indication in the message, terminates the S1AP message, and performs corresponding processing (such as releasing the context of the UE (user equipment)); if the HeNB does not establish an S1 interface via the HeNB GW but directly with the MME, the S1AP message is directly sent to the MME by the source HeNB, and the MME parses the GW context release indication in the message, and does not perform any processing. However, if the source HeNB and the target HeNB both establish an S1 interface via the same HeNB GW with the MME, then after the X2 handover procedure, the HeNB GW can learn that handover has happened to the UE through a path switch process, and perform corresponding processing on the UE context, without the need of additionally sending an S1AP message to indicate the HeNB GW to perform corresponding processing; therefore, in the above-mentioned case, the S1AP UE context release request message is a redundant message. With the research of LTE R11, the problem of the redundant message is not solved yet.

XP050541808, XP050542212 are draft 3GPP proposals which address X2 handover between a source Home evolved Node B (HeNB) and a target HeNB, which are attached to the same HeNB GW. The problem addressed is unnecessary signalling caused by the UE Context Release, and the solution proposed is not to send the UE Context Release message from the source HeNB to the HeNB GW where it is identified that both are attached to the same HeNB GW. New signalling is defined to inhibit the sending of the context release message.

### Summary

The present invention provides a UE context release method, eNB and home eNB gateway, so as to at least solve the problem in the related art that after the X2 handover procedure, the source eNB sends a redundant signaling indicating the home eNB to release the context of the user equipment.

According to an aspect of the present invention, a UE context release method is provided. The method includes: a source evolved Node B (eNB) determining whether gateway release determination information sent from a home eNB gateway has been received after user equipment finishes handover; if the source eNB has received the gateway release determination information, prohibiting a signaling, which is used to indicate the home eNB gateway to release context of the user equipment, from being sent to the home eNB gateway.

Before the source eNB determines whether the gateway release determination information sent from the home eNB gateway has been received, the source eNB receives the gateway release determination information, wherein a manner of the source eNB receiving the gateway release determination information includes: receiving a UE context release message or a handover request acknowledge message sent from the home eNB gateway to the source eNB, wherein the UE context release message or the handover request acknowledge message carries the gateway release determination information.

If the source eNB establishes a proxy X2 interface with a target eNB via the home eNB gateway, the home eNB gateway sending the UE context release message or the handover request acknowledgment message, carrying the gateway release determination information, to the source eNB includes: the home eNB gateway receiving the UE context release message or the handover request acknowledgment message sent by the target eNB; the home eNB gateway adding the gateway release determination information to the UE context release message or the handover request acknowledgment message, and sending to the source eNB the UE context release message or the handover request acknowledge message, which is added with the gateway release determination information; or if the source eNB establishes a proxy X2 interface with the target eNB via the gateway, the home eNB gateway sending the UE context release message or the handover request acknowledge message, carrying the gateway release determination information, to the source eNB includes: the home eNB gateway forwarding to the source eNB the UE context release message or the handover request acknowledge message which carries the gateway release determination information and is sent by the target eNB.

The gateway release determination information at least includes one indication of the following: proxy connection indication, and indication prohibiting the signaling being used to indicate the home eNB gateway to release the context of the user equipment from being sent to the home eNB gateway.

According to another aspect of the present invention, an evolved Node B (eNB) is provided. The eNB includes: a determination module, configured to determine whether gateway release determination information sent from a home eNB gateway has been received after user equipment finishes handover; a processing module, configured to prohibit, in a case where the determination module determines that the gateway release determination information sent from the home eNB gateway has been received, a source eNB from sending to the home eNB gateway a signaling being used to indicate the home eNB gateway to release context of the user equipment.

The eNB further includes: a receiving module, configured to receive the gateway release determination information sent by the home eNB gateway, wherein a manner for receiving the gateway release determination information sent by the home eNB gateway includes: receiving a UE context release message or a handover request acknowledge message sent by the home eNB gateway to the source eNB, wherein the UE context release message or the handover request acknowledge message carries the gateway release determination information.

The gateway release determination information at least includes one indication of the following: proxy connection indication, and indication prohibiting the signaling being used to indicate the home eNB gateway to release the context of the user equipment from being sent to the home eNB gateway.

According to still another aspect of the present invention, a home evolved Node B (eNB) gateway is provided. The home eNB gateway includes: a first sending module, configured to send to a source eNB a UE context release message carrying gateway release determination information; a second sending module, configured to send to the source eNB a handover request acknowledge message carrying the gateway release determination information.

The first sending module includes: a first receiving unit, configured to receive the UE context release message sent by a target eNB; a first sending unit, configured to add the gateway release determination information to the UE context release message when the source eNB establishes a proxy X2 interface with the target eNB via the home eNB gateway, and send to the source eNB the UE context release message which is added with the gateway release determination information; or a second sending unit, configured to forward to the source eNB the UE context release message which carries the gateway release determination information and is sent by the target eNB, when the source eNB establishes a proxy X2 interface with the target eNB via the gateway.

The second sending module includes: a second receiving unit, configured to receive the handover request acknowledge message sent by a target eNB; a third sending unit, configured to add the gateway release determination information to the handover request acknowledge message, when the source eNB establishes a proxy X2 interface with the target eNB via the home eNB gateway, and send to the source eNB the handover request acknowledge message which is added with the gateway release determination information; or a fourth sending unit, configured to forward to the source eNB the handover request acknowledge message which carries the gateway release determination information and is sent by the target eNB, when the source eNB establishes a proxy X2 interface with the target eNB via the gateway.

The gateway release determination information at least includes one indication of the following: proxy connection indication, and indication prohibiting the signaling being used to indicate the home eNB gateway to release the context of the user equipment from being sent to the home eNB gateway.

In the present invention, after the handover of the user equipment is finished, the source eNB determines whether the gateway release determination information sent by the home eNB gateway is received; the source does not send to the home eNB gateway the signaling indicating the home eNB gateway to release the context of the user equipment when it is determined that the gateway release determination information sent by the above-mentioned home eNB gateway is received; that is, the determination condition that the source eNB does not send the signaling indicating the home eNB gateway to release the context of the user equipment is provided, reducing the redundant transmission of the signaling indicating the home eNB gateway to release the context of the user equipment, and thus improving the utility efficiency of signaling indicating the home eNB gateway to release the context of the user equipment, effectively saving the cost necessary for sending the signaling indicating the home eNB gateway to release the context of the user equipment.

### Brief Description of the Drawings

Drawings, provided for further understanding of the present invention and forming a part of the specification, are used to explain the present invention together with embodiments of the present invention rather than to limit the present invention. In the drawings:
Fig. 1 shows a flowchart of a UE context release method according to an embodiment of the present invention;
Fig. 2 shows a schematic diagram of an E-UTRAN network architecture of a home eNB according to a preferred embodiment of the present invention;
Fig. 3 shows a schematic diagram of the architecture of a connection mode between a source eNB and target eNB according to a preferred embodiment of the present invention;
Fig. 4 shows a schematic diagram of the architecture of a connection mode between another source eNB and target eNB according to a preferred embodiment of the present invention;
Fig. 5 shows a schematic diagram of the architecture of a connection mode between yet another source eNB and target eNB according to a preferred embodiment of the present invention;
Fig. 6 shows a flowchart of adding gateway release judgment information to a UE context release message by a home eNB gateway according to a preferred embodiment of the present invention;
Fig. 7 shows a flowchart of adding gateway release judgment information to a UE context release message by a target eNB according to an embodiment of the present invention;
Fig. 8 shows a flowchart of adding gateway release judgment information to a handover request acknowledge message by a home eNB gateway according to a preferred embodiment of the present invention;
Fig. 9 shows a flowchart of adding gateway release judgment information to a handover request acknowledge message by a target eNB according to a preferred embodiment of the present invention;
Fig. 10 shows a flowchart of sending an S1 UE context release request message by a source eNB according to a preferred embodiment of the present invention;
Fig. 11 shows a flowchart of sending an S1 UE context release request message by a source eNB according to another embodiment of the present invention;
Fig. 12 shows a block diagram of the structure an eNB according to an embodiment of the present invention;
Fig. 13 shows a block diagram of the structure an eNB according to a preferred embodiment of the present invention;
Fig. 14 shows a block diagram of the structure a home eNB gateway according to an embodiment of the present invention;
Fig. 15 is a block diagram of the structure of a first sending module according to a preferred embodiment of the present invention;
Fig. 16 is a block diagram of the structure of a second sending module according to a preferred embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

In each of the following embodiments, communication can be realized via wireless connection or wired communication or a combination of both, which is not limited in the present invention.

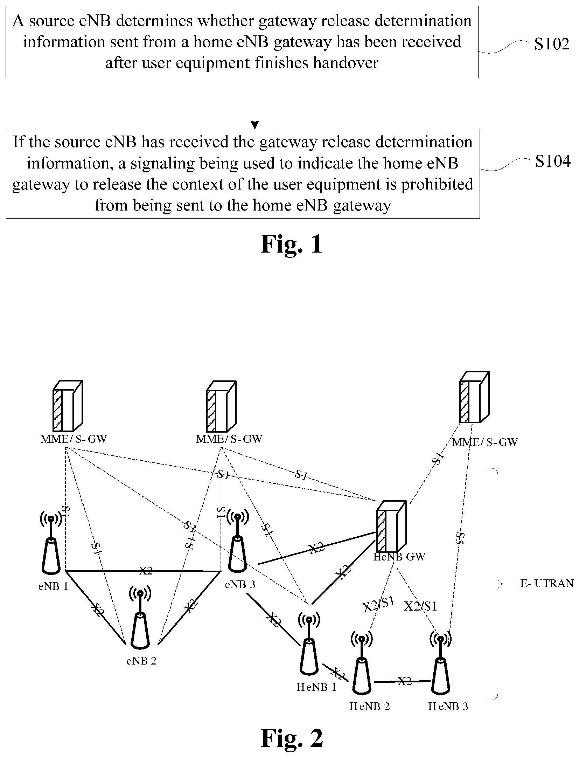

Fig. 1 shows a flowchart of a UE context release method according to an embodiment of the present invention, as shown in Fig. 1, the UE context release method includes:
S102: a source eNB determines whether gateway release determination information sent from a home eNB gateway has been received after user equipment finishes handover; and
S104: if the source eNB has received the gateway release determination information, a signaling being used to indicate the home eNB gateway to release the context of the user equipment is prohibited from being sent to the home eNB gateway.

In the above-mentioned preferred embodiment, after the handover of the user equipment is finished (for example, after the X2 handover of the user equipment is finished), the source eNB determines whether the gateway release determination information sent by the home eNB gateway is received; the source does not send the signaling indicating the home eNB gateway to release the context of the user equipment to the home eNB gateway when it is determined that the gateway release determination information sent by the above-mentioned home eNB gateway is received (for example, the signaling indicating the home eNB gateway to release the context of the user equipment may be an S1 UE context release request message), reducing the redundant transmission of the signaling indicating the home eNB gateway to release the context of the user equipment, and effectively saving the cost necessary for sending the signaling indicating the home eNB gateway to release the context of the user equipment.

In order to improve the implementation of the present invention, this preferred embodiment provides a preferred manner of a source eNB receiving gateway release determination information, for example, before the source eNB determines whether the gateway release determination information sent by the home eNB gateway is received, the source eNB can receive the gateway release determination information by receiving the UE context release message or handover request acknowledge message which carries the gateway release determination information and is sent to the source eNB by the home eNB gateway.

In the above-mentioned preferred embodiment, the source eNB receives the gateway release determination information by receiving the UE context release message or the handover request acknowledge message, wherein after the X2 handover of the user equipment is finished, the above-mentioned handover request acknowledge message is an X2 handover request acknowledgement message.

This preferred embodiment provides a method for sending gateway release determination information, if the source eNB establishes a proxy X2 interface with a target eNB via the home eNB gateway, the home eNB gateway sending a UE context release message or a handover request acknowledge message, carrying gateway release determination information, to the source eNB may include: the home eNB gateway receiving the UE context release message or handover request acknowledge message sent by the target eNB; the home eNB gateway adding the gateway release determination information to the UE context release message or the handover request acknowledge message, and sending the UE context release message or the handover request acknowledge message, carrying the gateway release determination information, to the source eNB; or if the source eNB establishes a proxy X2 interface with the target eNB via the gateway, the home eNB gateway sending to the source eNB the UE context release message or the handover request acknowledge message, carrying the gateway release determination information, may include: the home eNB gateway forwarding to the source eNB the UE context release message or the handover request acknowledge message, carrying the gateway release determination information, sent by the target eNB.

In this preferred embodiment, when a source eNB establishes a proxy X2 interface with a target eNB via a home eNB gateway, gateway release determination information will be added to the UE context release message or handover request acknowledge message via the home eNB gateway or the target eNB, so as to satisfy usage requirements in different scenarios, and to finally indicate the source eNB whether it is required to send a signaling indicating the home eNB gateway to release the context of user equipment.

The above-mentioned preferred embodiments are further illustrated hereinafter in conjunction with examples.

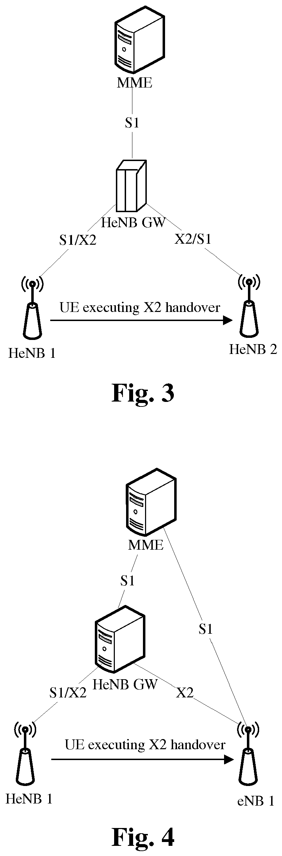

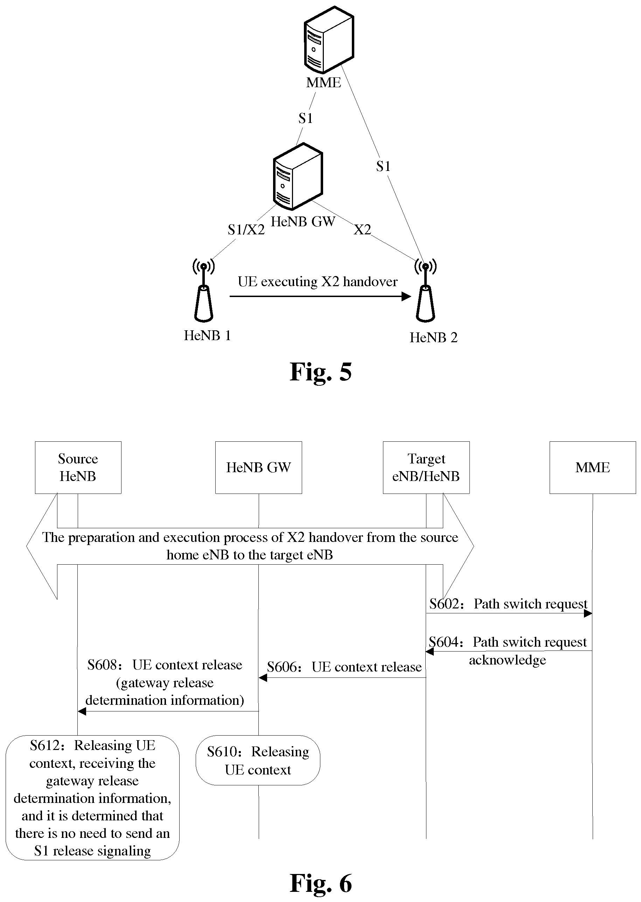

On the basis of each of the above-mentioned preferred embodiment, the source eNB can establish a plurality of connection modes with the target eNB via the home eNB gateway, and the HeNB (home eNB) can be connected with the MME as an S1 proxy via the HeNB GW (home eNB gateway); and if the HeNB is connected with the MME as an S1 proxy via the HeNB GW, the HeNB GW relays the S1 signaling relevant to the UE. In R10, an X2 direct interface exists between HeNBs, and user equipment handover optimization can be performed between the HeNBs via the X2 direct interface, but an X2 interface between the macro eNB and the home eNB is not supported. In R11, the HeNB GW does not only has the function of an S1 proxy, and may also has the function of an X2 proxy; that is, the source eNB and the target eNB establish a proxy X2 interface via the HeNB GW, and a direct X2 interface or a proxy X2 interface might be supported both between an eNB (macro eNB) and a HeNB, and between an HeNB and another HeNB. As shown in Fig. 2, eNB 3 in Fig. 2 may establish a direct X2 interface with HeNB 1, but establish a proxy X2 interface with HeNB 2; HeNB 1 can establish a direct X2 interface with HeNB 2, but establish a proxy X2 interface with HeNB 3; if the source HeNB and the target HeNB (or eNB) are connected via the HeNB GW by means of the X2 proxy, the X2 message is forwarded to an opposite-end eNB by the HeNB GW in the X2 handover procedure, therefore, in this condition, the HeNB GW learns that the handover has occurred to the UE, and there is no need for an additional signaling to indicate the HeNB GW to release the UE context (the context of the user equipment). Particularly, in the following scenarios, it is possible not to send an additional signaling to indicate the HeNB GW to release the UE context. As shown in Fig. 3, the UE executes X2 to handover to HeNB 2 from HeNB 1; a proxy X2 interface is established between HeNB 1 and HeNB 2 via the HeNB GW, and HeNB 1 and HeNB 2 are both connected with the MME via the HeNB GW. As shown in Fig. 4, the UE executes X2 to handover to eNB1 from HeNB 1 and a proxy X2 interface is established between HeNB 1 and eNB 1 via the HeNB GW; and HeNB 1 is connected with MME via the HeNB GW, and eNB 2 is not connected with the MME via the HeNB GW. As shown in Fig. 5, the UE executes X2 to handover to HeNB 2 from HeNB 1, a proxy X2 interface is established between HeNB 1 and HeNB 2 via the HeNB GW; and HeNB 1 is connected with the MME via the HeNB GW, and eNB 2 is not directly connected with the MME via the HeNB GW. In the above-mentioned scenarios, if according to the existing RIO protocol specification, after the X2 handover is executed, the source HeNB will send a redundant S1 UE context release request message to indicate the HeNB GW to release the UE context; in the present invention, gateway release determination information is carried in the UE context release message and the handover request acknowledge message to indicate the source eNB not to send the S1 UE context release request message, so as to save the cost necessary for sending the UE context release request message.

Now examples will be combined to describe the flow of a home eNB gateway adding gateway release determination information to a UE context release message to indicate the source eNB not to send an S1 UE context release message. In this example, the source HeNB establishes an X2 proxy connection with a target eNB via a HeNB GW, if not specifically indicated, if the HeNB is connected with a MME via the HeNB GW herein, the S1 message should be forwarded via the HeNB GW, wherein the target eNB can be a macro eNB and can also be a home eNB; as shown in Fig. 6, the flow of the home eNB adding the gateway release determination information to the UE context release message includes:
S602: after the preparation and execution process of X2 handover from the source HeNB to a target eNB is finished, the target eNB sends a path switch request message to the MME; if the target eNB is a home eNB, the target eNB and the source home eNB are connected with the MME via the same HeNB GW, the message is received by the home eNB gateway and sent to the MME, and the HeNB GW receives the message and performs corresponding processing on the context relevant to the S1 connection for UE handover, which includes updating the S1AP ID mapping relationship table of the UE; the HeNB GW can assign a new S1AP ID for the UE or continue to use the original S1AP ID;
S604: the MME sends a path switch request acknowledge message to the target eNB;
S606: the target eNB sends the UE context release message to the source HeNB, so as to indicate the source HeNB to release the context of UE handover; since the source HeNB establishes an X2 proxy connection via the HeNB GW with the target eNB, the message is routed and forwarded to the source eNB by the HeNB GW;
S608: after the HeNB GW receives the UE context release message, the message is added with the gateway release determination information and sent to the source eNB, wherein the gateway release determination information can be proxy connection indication or indication prohibiting sending to the home eNB gateway a signaling for indicating the home eNB gateway to release the context of the user equipment;
S610: the HeNB GW releases the context of UE handover, for example, S1AP ID, X2AP ID, etc., if corresponding processing is performed on the context relevant to the S1 connection of the UE handover in the path switch process, after the HeNB GW receives the path switch request message, in step S904, then in this step the HeNB GW only needs to release the X2 connection relevant context of the UE handover, such as X1AP ID; otherwise, in this step, the HeNB GW not only needs to release the X2 connection relevant context of the UE handover, such as X2AP ID, but also needs to release the S1 connection relevant context of the UE handover, such as S1AP ID; this step does not have a chronological order relationship with step S612, and may happen before step S612 or after step S612; and
S612: the source HeNB receives the UE context release message, releases the context information of the UE and obtains the gateway release determination information by parsing the message, and it is determined that there is no need to send an S1 release signaling (UE context release request message) to indicate the HeNB GW to release the context of the UE handover.

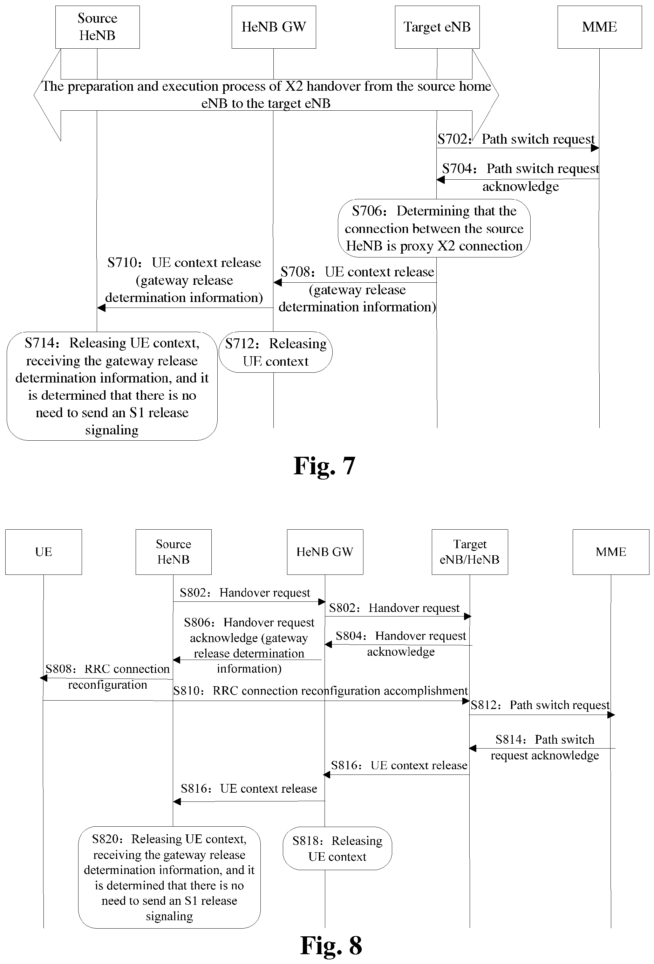

This embodiment describes the flow of a target eNB adding gateway release determination information to a UE context release message to indicate the source eNB not to send an S1 UE context release message. The source HeNB establishes an X2 proxy connection with a target eNB via a HeNB GW, if not specifically indicated, if the HeNB is connected with a MME via the HeNB GW herein, the S1 message should be forwarded via the HeNB GW, wherein the target eNB is a macro eNB; as shown in Fig. 7, the flow of the home eNB adding the gateway release determination information to the UE context release message includes:
S702: after the preparation and execution process of X2 handover from the source HeNB to the target eNB is finished, the target eNB sends a path switch request message to the MME;
S704: the MME sends a path switch request acknowledge message to the target eNB;
S706: the target eNB determines the type of the X2 connection between the target eNB and the source HeNB, if the source HeNB establishes X2 proxy connection with the target eNB via the HeNB GW, the HeNB GW indicates the target eNB that between the target eNB and the source HeNB is X2 proxy connection in the process of X2 setup or TNL address discovery; or, IEs contained in X2 setup response messages in the cases of proxy connection establishment or direct connection establishment are different, then the target HeNB can determine the type of the connection between the target HeNB and the source eNB according to the IE contained in the content of the X2 setup response message; in this embodiment, if the target eNB determines that between the target eNB and the source HeNB is proxy X2 connection;
S708: the target eNB sends a UE context release message to the source HeNB, so as to indicate the source HeNB to release the context of the UE handover, with the message containing gateway release determination information, wherein the gateway release determination information can be proxy connection indication or indication prohibiting sending to the home eNB gateway a signaling for indicating the home eNB gateway to release the context of the user equipment;
S710: the HeNB GW receives the UE context release message and then routes the message to the source HeNB;
S712: the HeNB GW releases the context of the UE handover, containing A1AP ID, X2AP ID, etc., this step has no chronological order relationship with step S714, that is, it may happen before step S714 or after step S714;
S714: the source HeNB receives the UE context release message, releases the context of the UE handover, and obtains the gateway release determination information by parsing the message, then it is determined that there is no need to send an S1 release signaling (UE context release request message) to indicate the HeNB GW to release the context of the UE handover.

This embodiment describes the flow of a home eNB gateway adding gateway release determination information to a handover request acknowledge (handover request ACK) message to indicate the source eNB not to send an S1 UE context release message. In this example, the source HeNB establishes an X2 proxy connection with a target eNB via a HeNB GW, if not specifically indicated, if the HeNB is connected with a MME via the HeNB GW herein, the S1 message should be forwarded via the HeNB GW, wherein the target eNB can be a macro eNB and can also be a home eNB; as shown in Fig. 8, the flow of the home eNB adding the gateway release determination information to the UE context release message includes:
S802: the source HeNB receives a measurement report sent by the UE, and sends a handover request message to the target eNB, so as to initiate an X2 handover flow; since the X2 proxy connection is established by the source HeNB and the target eNB via the HeNB GW, the message is routed and forwarded to the target eNB by the HeNB GW;
S804: the target eNB accepts the handover request and sends a handover request acknowledge message to the source HeNB, with the message not containing gateway release determination information;
S806: after the HeNB GW receives the handover request acknowledge message sent by the target eNB, the message is added with the gateway release determination information and sent to the source eNB, wherein the gateway release determination information can be proxy connection indication or indication prohibiting sending to the home eNB gateway a signaling indicating the home eNB gateway to release the context of the user equipment;
S808: the source HeNB sends an RRC (Radio Resource Control) connection reconfiguration message to the UE, with the message containing mobile control information, indicating the UE to perform corresponding handover operation, such as uplink synchronous operation with the target eNB;
S810: after finishing the uplink synchronous operation with the target eNB, the UE sends the RRC connection reconfiguration message to the target eNB;
S812: the target eNB sends a path switch request message to the MME, so as to switch the user-plane data plane of the user; if the target eNB is a home eNB, the target eNB and the source home eNB are connected with the MME via the same HeNB GW, then the message is received by the home eNB gateway and sent to the MME, and the HeNB GW receives the message and performs corresponding processing on the context relevant to the S1 connection for the UE handover, which includes updating the S1AP ID mapping relationship table of the UE; the HeNB GW can assign a new S1AP ID for the UE or continue to use the original S1AP ID;
S814: the MME replies a path switch request acknowledge message to the target eNB;
S816: the target eNB sends the UE context release message to the source HeNB, so as to indicate the source HeNB that the UE has finished the switch flow thereof and has released the resource thereof; since the source HeNB establishes an X2 proxy connection with the target eNB via the HeNB GW, the message is routed and forwarded to the source eNB by the HeNB GW;
S818: the HeNB GW releases the relevant resource of the UE handover, for example, S1AP ID, X2AP ID, etc., if corresponding processing is performed on the context relevant to the S1 connection of the UE handover after the HeNB GW receives the path switch request message in step S812, then in this step the HeNB GW only needs to release the X2 connection relevant context of the UE handover, such as X1AP ID; otherwise, in this step, the HeNB GW not only needs to release the X2 connection relevant context of the UE handover, such as X2AP ID, but also needs to release the S1 connection relevant context of the UE handover, such as S1AP ID; this step does not have a chronological order relationship with step S820, and may happen before step S820 or after step S820; and
S820: the source HeNB receives the UE context release message and releases the context of the UE handover, and since the source HeNB obtains the gateway release determination information when receiving the handover request acknowledge message at step S816, and it is determined that there is no need to send an S1 release signaling (UE context release request message) to indicate the HeNB GW to release the context of the UE handover.

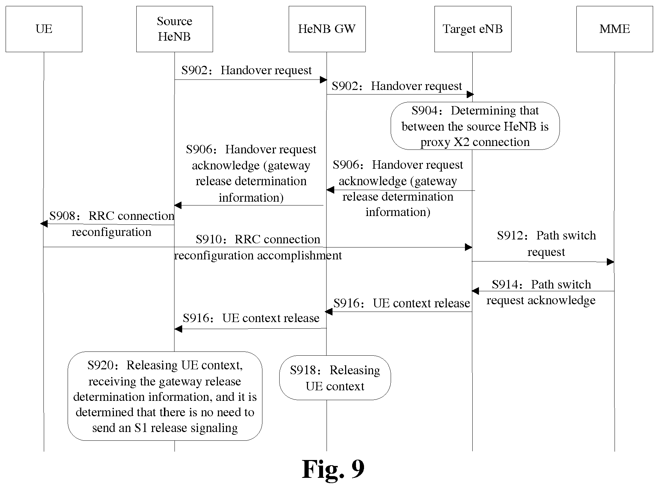

This embodiment describes the flow of a target eNB adding gateway release determination information to a handover request acknowledge (handover request ACK) message to indicate the source eNB not to send an S1 UE context release message. The source HeNB establishes an X2 proxy connection with a target eNB via a HeNB GW, if not specifically indicated, if the HeNB is connected with a MME via the HeNB GW herein, the S1 message should be forwarded via the HeNB GW, wherein the target eNB is a macro eNB; as shown in Fig. 9, the flow of the home eNB adding the gateway release determination information to the UE context release message includes:
S902: the source HeNB receives a measurement report sent by the UE, and sends a handover request message to the target eNB, so as to initiate an X2 handover flow; since the X2 proxy connection is established by the source HeNB and the target eNB via the HeNB GW, the message is routed and forwarded to the target eNB by the HeNB GW;
S904: the target eNB determined the type of the X2 connection between the target eNB and the source HeNB, if the source HeNB establishes X2 proxy connection with the target eNB via the HeNB GW, the HeNB GW indicates the target eNB that between the target eNB and the source HeNB is X2 proxy connection in the process of X2 setup or TNL address discovery; or, IEs contained in X2 setup response messages in the cases of proxy connection establishment or direct connection establishment are different, then the target HeNB can determine the type of the connection between the target HeNB and the source eNB according to the IE contained in the content of the X2 setup response message; in this embodiment, the target eNB determines that between the target eNB and the source HeNB is proxy X2 connection;
S906: the target eNB accepts the handover request and then sends a handover request acknowledge message to the source HeNB, with the message containing gateway release determination information, wherein the gateway release determination information may be an proxy connection indication or an indication prohibiting sending to the home eNB gateway a signaling indicating the home eNB to release the context of the user equipment; since the source HeNB establishes X2 proxy connection with the target eNB via the HeNB GW, and the message is routed and forwarded to the source eNB by the HeNB GW;
S908: the source HeNB sends an RRC connection reconfiguration message to the UE, with the message containing mobile control information, indicating the UE to perform corresponding handover operation, such as uplink synchronous operation with the target eNB;
S910: after finishing the uplink synchronous operation with the target eNB, the UE sends a RRC connection reconfiguration accomplishment message to the target eNB;
S912: the target eNB sends a path switch request message to the MME, so as to switch the user-plane data plane of the user;
S914: the MME replies a path switch request acknowledge message to the target eNB;
S916: the target eNB sends the UE context release message to the source HeNB, so as to indicate the source HeNB that the UE has finished the switch flow thereof and has released the context thereof; since the source HeNB establishes an X2 proxy connection with the target eNB via the HeNB GW, the message is routed and forwarded to the source eNB by the HeNB GW;
S918: the HeNB GW releases the context of the UE handover, containing A1AP ID, X2AP ID, etc., this step has no chronological order relationship with step S920, that is, it may happen before step S920 or after step S920;
S920: the source HeNB receives the UE context release message and releases the context of the UE handover, and since the source HeNB obtains the gateway release determination information when receiving the handover request acknowledge message at step S906, and it is determined that there is no need to send an S1 release signaling (UE context release request message) to indicate the HeNB GW to release the context of the UE handover.

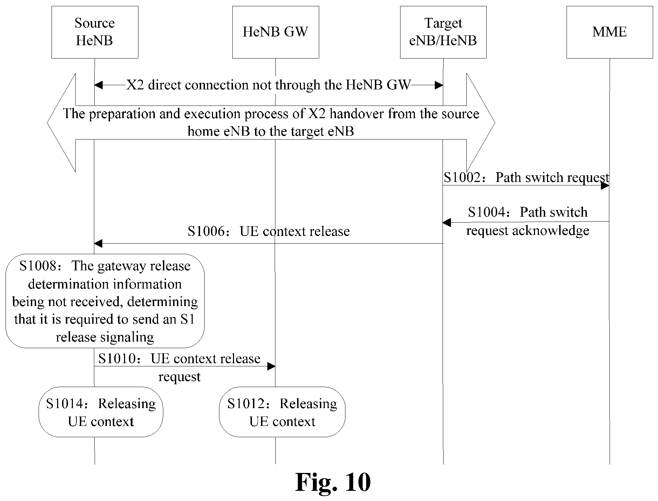

This embodiment describes the flow of a source eNB sending an S1 UE context release request message. In this embodiment, no direct X2 connection is established between the HeNB and the target eNB via the HeNB GW, wherein the target eNB can be a macro eNB and can also be a home eNB; as shown in Fig. 10, the flow of the source eNB sending an S1 UE context release request message includes:
S 1002: after the preparation and execution process of X2 handover from the source HeNB to the target eNB is finished, the target eNB sends a path switch request message to the MME;
S1004: the MME sends a path switch request acknowledge message to the target eNB;
S1006: the target eNB sends the UE context release message to the source HeNB, so as to indicate the source HeNB to release the context of the UE handover; since between the HeNB and the target eNB is direct X2 connection, the message is not routed and forwarded by the HeNB GW;
S1008: after the source HeNB receives the UE context release message, the message does not contain the gateway release determination information, and then it is determined that it is required to send an S1 release signaling (UE context release request message) to indicate the HeNB GW to release the context of the UE handover;
S1010: the source HeNB sends an S1AP UE context release request message to indicate the HeNB GW to release the context of the UE handover;
S1012: the HeNB GW releases the context of the UE handover, for example, A1AP ID, this step has no chronological order relationship with step S1014, that is, it may happen before step S1014 or after step S1014;
S1014: the source HeNB releases the context of the UE handover.

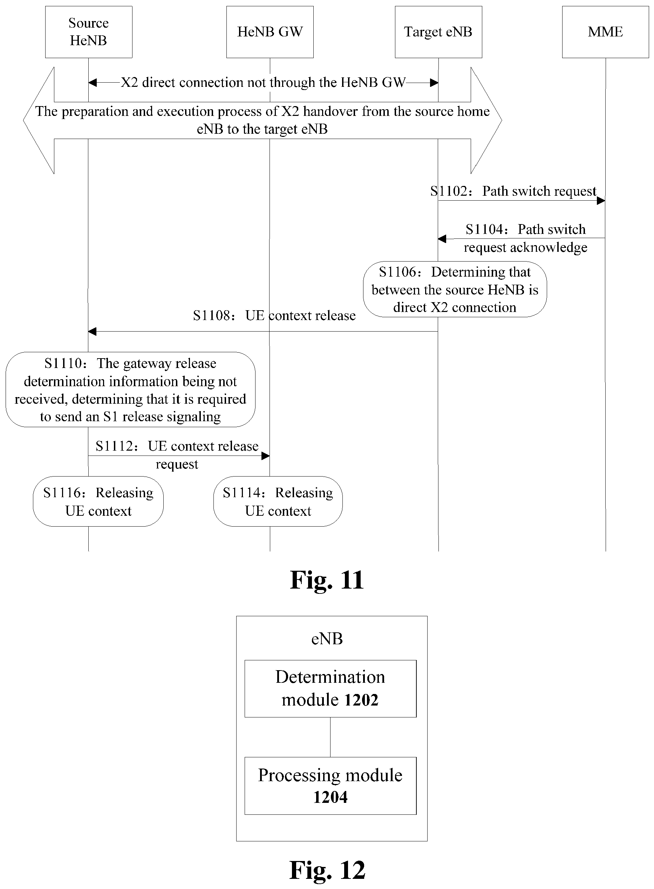

This embodiment describes the flow of a source eNB sending an S1 UE context release request message. In this embodiment, no direct X2 connection is established between the HeNB and the target eNB via the HeNB GW, wherein the target eNB is a macro eNB; as shown in Fig. 11, the flow of the source eNB sending an S1 UE context release request message includes:
S1102: after the preparation and execution process of X2 handover from the source HeNB to the target eNB is finished, the target eNB sends a path switch request message to the MME;
S1104: the MME transmits a path switch request acknowledge message to the target eNB;
S1106: the target eNB determines the type of the X2 connection between the target eNB and the source HeNB, if the source HeNB establishes X2 proxy connection with the target eNB via the HeNB GW, the HeNB GW indicates the target eNB that between the target eNB and the source HeNB is X2 proxy connection in the process of X2 setup or TNL address discovery, otherwise, there is no indication; or, IEs contained in X2 setup response messages in the cases of proxy connection establishment or direct connection establishment are different, then the target HeNB can determine the type of the connection between the target HeNB and the source eNB according to the IE contained in the content of the X2 setup response message; in this embodiment, if the target eNB determines that between the target eNB and the source HeNB is direct X2 connection;
S1108: the target eNB sends a UE context release message to the source HeNB, so as to indicate the source HeNB to release the context of the UE handover; since the target eNB determines that between the target eNB and the source HeNB is direct X2 connection, the message does not contain the gateway release determination information; and since between the source HeNB and the target eNB is direct X2 connection, the message is not routed and forwarded via the HeNB GW;
S1100: after the source HeNB receives the UE context release message, the message does not contain the gateway release determination information, and then it is determined that it is required to send an S1 release signaling (UE context release request message) to indicate the HeNB GW to release the context of the UE handover;
S1112: the source HeNB sends an S1AP UE context release request message to indicate the HeNB GW to release the context of the UE handover;
S 1114: the HeNB GW releases the relevant resource of the UE handover, for example, A1AP ID, this step has no chronological order relationship with step S1116, that is, it may happen before step S1116 or after step S1116;
S1116: the source HeNB releases the context of the UE handover.

Preferably, the above-mentioned gateway release determination information at least includes but is not limited to one indication of the following: proxy connection indication, and indication prohibiting the signaling being used to indicate the home eNB gateway to release the context of the user equipment from being sent to the home eNB gateway, so as to realize indicating the source eNB not to send to the home eNB gateway a signaling indicating the home eNB gateway to release the context of the user equipment in different manners, and facilitating saving the resource required to send the signaling indicating the home eNB gateway to release the context of the user equipment.

Preferably, the home eNB gateway receives the X2 UE context release message; and when the signaling indicating the home eNB gateway to release the context of the user equipment sent by the source eNB is not received, the home eNB gateway releases the context of the user equipment according to the received X2 UE context release message, realizing the fact that the home eNB gateway can release the context of the user equipment and release system resources immediately and effectively.

Preferably, whether there is an X2 proxy connection between the target eNB and the source HeNB or not can be determined in at least one of the following manners: if the source HeNB establishes X2 proxy connection with the target eNB via the HeNB GW, the HeNB GW indicates the target eNB that there is an X2 proxy connection between the target eNB and the source HeNB in the process of X2 setup or TNL address discovery; or, IEs contained in X2 setup response messages in the cases of proxy connection establishment or direct connection establishment are different, then the target HeNB can determine the type of the connection between the target HeNB and the source eNB according to the IE contained in the content of the X2 setup response message.

Fig. 12 shows a block diagram of the structure an eNB according to an embodiment of the present invention; as shown in Fig. 12, the eNB includes a determination module **1202,** configured to determine whether gateway release determination information sent from a home eNB gateway has been received after user equipment finishes handover; a processing module **1204,** in communication with the determination module **1202,** configured to prohibit the source eNB from sending to the home eNB gateway a signaling being used to indicate the home eNB gateway to release the context of the user equipment, in a case where the source eNB receives the gateway release determination information.

In the above-mentioned preferred embodiment, after the handover of the user equipment is finished, the determination module **1202** determines whether the gateway release determination information is received; when it is determined that the gateway release determination information sent by the above-mentioned home eNB gateway is received, the processing module **1204** does not send the signaling indicating the home eNB gateway to release the context of the user equipment to the home eNB gateway, reducing the redundant transmission of the signaling indicating the home eNB gateway to release the context of the user equipment, and thus improving the utility efficiency of signaling indicating the home eNB gateway to release the context of the user equipment, effectively saving the cost necessary for sending the signaling indicating the home eNB gateway to release the context of the user equipment.

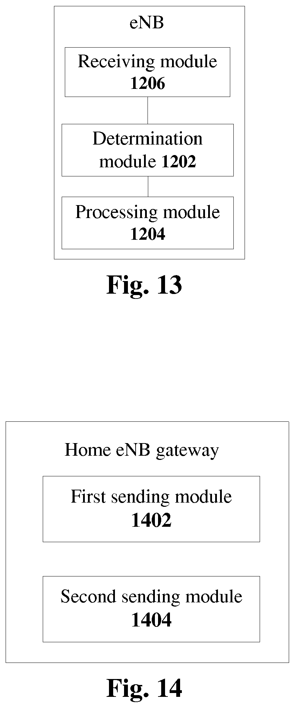

Preferably, as shown in Fig. 13, the above-mentioned eNB may further include: a receiving module **1206,** configured to receive the gateway release determination information sent by the home eNB gateway, wherein the manner for receiving the gateway release determination information sent by the home eNB gateway includes: receiving a UE context release message or a handover request acknowledge message which carries the gateway release determination information and is sent by the home eNB gateway to the source eNB.

In the above-mentioned preferred embodiment, the source eNB can receive the gateway release determination information by receiving the UE context release message or the handover request acknowledge message sent by the home eNB gateway to the source eNB, the method for acquiring the gateway release determination information can be selected according to usage scenarios, thus enhancing the implementation of the present invention.

Preferably, the above-mentioned gateway release determination information at least includes but is not limited to one indication of the following: proxy connection indication, and indication prohibiting the signaling being used to indicate the home eNB gateway to release the context of the user equipment from being sent to the home eNB gateway, so as to realize sending the signaling indicating the home eNB gateway to release the context of the user equipment to the home eNB gateway in different manners, and facilitating saving the resources required for sending the signaling indicating the home eNB gateway to release the context of the user equipment.

Fig. 14 shows a block diagram of the structural a home eNB gateway according to an embodiment of the present invention; as shown in Fig. 14, the home eNB gateway includes: a first sending module **1402,** configured to send to a source eNB a UE context release message carrying gateway release determination information; and a second sending module **1404,** configured to send to the source eNB a handover request acknowledge message carrying the gateway release determination information.

In the above-mentioned preferred embodiment, the source eNB receives the gateway release determination information by receiving the UE context release message or the handover request acknowledge message, wherein when the X2 handover of the user equipment is finished, the above-mentioned handover request acknowledge message is an X2 handover request acknowledgement message.

Preferably, the above-mentioned home eNB gateway receives the X2 UE context release message; and when the signaling indicating the home eNB gateway to release the context of the user equipment sent by the source eNB is not received, the home eNB gateway releases the context of the user equipment according to the received X2 UE context release message, realizing the fact that the home eNB gateway can release the context of the user equipment and release system resources immediately and effectively.

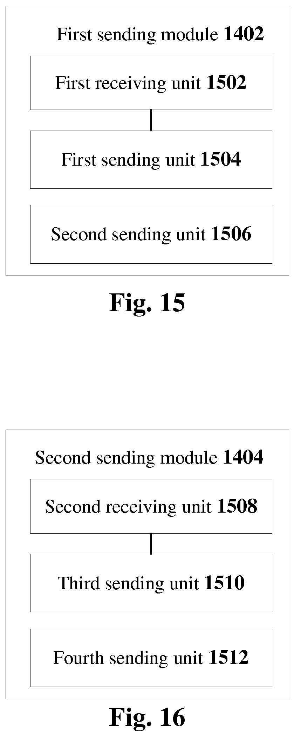

In order to satisfy the requirements of different usage scenarios, as shown in Fig. 15, the above-mentioned first sending module **1402** may include: a first receiving unit **1502,** configured to receive the UE context release message sent by the target eNB; a first sending unit **1504,** in communication with the first receiving unit **1502,** configured to add the gateway release determination information to the UE context release message when the source eNB establishes a proxy X2 interface with the target eNB via the home eNB gateway, and to send the source eNB the UE context release message which is added with the gateway release determination information; or a second sending unit **1506,** configured to forward to the source eNB the UE context release message, carrying the gateway release determination information, sent by the target eNB, when the source eNB establishes a proxy X2 interface with the target eNB via the home eNB gateway.

In the above-mentioned preferred embodiment, when a source eNB establishes a proxy X2 interface with a target eNB via a home eNB gateway, gateway release determination information will be added to the UE context release message via the home eNB gateway or the target eNB, so as to satisfy usage requirements in different scenarios, and to indicate the source eNB whether it is required to send a signaling indicating the home eNB gateway to release the context of user equipment, thereby enhancing the practicability of this embodiment.

In order to satisfy the requirements of different usage scenarios, as shown in Fig. 16, the second sending module **1404** may include: a second receiving unit **1508,** configured to receive the handover request acknowledge message sent by the target eNB; a third sending unit **1510,** in communication with the second receiving unit **1508,** configured to add the gateway release determination information to the handover request acknowledge message, when the source eNB establishes a proxy X2 interface with the target eNB via the home eNB gateway, and to send the source eNB the handover request acknowledge message which is added with the gateway release determination information; or a fourth sending unit **1512,** configured to forward to the source eNB the handover request acknowledge message, carrying the gateway release determination information, sent by the target eNB, when the source eNB establishes a proxy X2 interface with the target eNB via the gateway.

In the above-mentioned preferred embodiment, when a source eNB establishes a proxy X2 interface with a target eNB via a home eNB gateway, gateway release determination information will be added to the handover request acknowledge message via the home eNB gateway or the target eNB, so as to satisfy usage requirements in different scenarios, and to indicate the source eNB whether it is required to send a signaling indicating the home eNB gateway to release the context of user equipment, thereby enhancing the practicability of this embodiment.

In order to indicate the source eNB not to send the signaling indicating the home eNB gateway to release the context of the user equipment, the gateway release determination information can at least includes one indication of the following: proxy connection indication, and indication prohibiting the signaling being used to indicate the home eNB gateway to release the context of the user equipment from being sent to the home eNB gateway, so as to realize sending the signaling indicating the home eNB gateway to release the context of the user equipment to the home eNB gateway in different manners, and facilitating saving the resources required for sending the signaling indicating the home eNB gateway to release the context of the user equipment.

In summary, on the basis of each of the above-mentioned preferred embodiments, the present invention provides a UE context release method and system; by means that after the handover of the user equipment is finished, the source eNB determines whether the gateway release determination information is received; the source does not send the signaling indicating the home eNB gateway to release the context of the user equipment, when it is determined that the gateway release determination information sent by the above-mentioned home eNB gateway is received; the problem in the related art that the source eNB sends a redundant signaling indicating the home eNB gateway to release the context of the user equipment, after the X2 handover procedure, thus improving the utility efficiency of signaling indicating the home eNB gateway to release the context of the user equipment, effectively saving the cost necessary for sending the signaling indicating the home eNB gateway to release the context of the user equipment.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module, thus to be realized. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection as defined by the appended claims of the present invention.

## Claims

1. A user equipment, UE, context release method, **characterized by** comprising:
a source evolved Node B, eNB, determining whether gateway release determination information sent from a home eNB gateway has been received after user equipment finishes handover;
if the source eNB has received the gateway release determination information, prohibiting a signaling, which is used to indicate the home eNB gateway to release context of the user equipment, from being sent to the home eNB gateway;
**characterized in that** the home eNB gateway receives an X2 UE context release message; and when the signaling indicating the home eNB gateway to release the context of the user equipment sent by the source eNB is not received, the home eNB gateway releases the context of the user equipment according to the received X2 UE context release message.

2. The method according to claim 1, **characterized in that** before the source eNB determines whether the gateway release determination information sent from the home eNB gateway has been received, the source eNB receives the gateway release determination information, wherein a manner of the source eNB receiving the gateway release determination information comprises: receiving a UE context release message or a handover request acknowledge message sent from the home eNB gateway to the source eNB, wherein the UE context release message or the handover request acknowledge message carries the gateway release determination information.

3. The method according to claim 2, **characterized in that**
if the source eNB establishes a proxy X2 interface with a target eNB via the home eNB gateway, the home eNB gateway sending the UE context release message or the handover request acknowledgment message, carrying the gateway release determination information, to the source eNB comprises: the home eNB gateway receiving the UE context release message or the handover request acknowledgment message sent by the target eNB; the home eNB gateway adding the gateway release determination information to the UE context release message or the handover request acknowledgment message, and sending to the source eNB the UE context release message or the handover request acknowledge message, which is added with the gateway release determination information; or
if the source eNB establishes a proxy X2 interface with the target eNB via the gateway, the home eNB gateway sending the UE context release message or the handover request acknowledge message, carrying the gateway release determination information, to the source eNB comprises: the home eNB gateway forwarding to the source eNB the UE context release message or the handover request acknowledge message which carries the gateway release determination information and is sent by the target eNB.

4. The method according to any one of claims 1-3, **characterized in that** the gateway release determination information at least comprises one indication of the following: proxy connection indication, and indication prohibiting the signaling being used to indicate the home eNB gateway to release the context of the user equipment from being sent to the home eNB gateway.

5. An evolved Node B, eNB, **characterized by** comprising:
a determination module, configured to determine whether gateway release determination information sent from a home eNB gateway has been received after user equipment finishes handover;
a processing module, configured to prohibit, in a case where the determination module determines that the gateway release determination information sent from the home eNB gateway has been received, a source eNB from sending to the home eNB gateway a signaling being used to indicate the home eNB gateway to release context of the user equipment;
**characterized in that** the home eNB gateway is configured to receive an X2 UE context release message; and the home eNB gateway is further configured to, when the signaling indicating the home eNB gateway to release the context of the user equipment sent by the source eNB is not received, release the context of the user equipment according to the received X2 UE context release message.

6. The eNB according to claim 5, **characterized by** further comprising:
a receiving module, configured to receive the gateway release determination information sent by the home eNB gateway, wherein a manner for receiving the gateway release determination information sent by the home eNB gateway comprises: receiving a UE context release message or a handover request acknowledge message sent by the home eNB gateway to the source eNB, wherein the UE context release message or the handover request acknowledge message carries the gateway release determination information.

7. The eNB according to claim 5 or 6, **characterized in that** the gateway release determination information at least comprises one indication of the following:
proxy connection indication, and indication prohibiting the signaling being used to indicate the home eNB gateway to release the context of the user equipment from being sent to the home eNB gateway.

8. A home evolved Node B, eNB, gateway, **characterized by** comprising:
a first sending module, configured to send to a source eNB a UE context release message carrying gateway release determination information;
a second sending module, configured to send to the source eNB a handover request acknowledge message carrying the gateway release determination information;
**characterized in that** the home eNB gateway is configured to receive an X2 UE context release message; and the home eNB gateway is further configured to, when a signaling indicating the home eNB gateway to release context of the user equipment sent by the source eNB is not received, release the context of the user equipment according to the received X2 UE context release message.

9. The home evolved Node B, eNB, gateway according to claim 8, **characterized in that** the first sending module comprises:
a first receiving unit, configured to receive the UE context release message sent by a target eNB;
a first sending unit, configured to add the gateway release determination information to the UE context release message when the source eNB establishes a proxy X2 interface with the target eNB via the home eNB gateway, and send to the source eNB the UE context release message which is added with the gateway release determination information; or
a second sending unit, configured to forward to the source eNB the UE context release message which carries the gateway release determination information and is sent by the target eNB, when the source eNB establishes a proxy X2 interface with the target eNB via the gateway.

10. The home eNB gateway according to claim 8, **characterized in that** the second sending module comprises:
a second receiving unit, configured to receive the handover request acknowledge message sent by a target eNB;
a third sending unit, configured to add the gateway release determination information to the handover request acknowledge message, when the source eNB establishes a proxy X2 interface with the target eNB via the home eNB gateway, and send to the source eNB the handover request acknowledge message which is added with the gateway release determination information; or
a fourth sending unit, configured to forward to the source eNB the handover request acknowledge message which carries the gateway release determination information and is sent by the target eNB, when the source eNB establishes a proxy X2 interface with the target eNB via the gateway.

11. The home eNB gateway according to any one of claims 8-10, **characterized in that** the gateway release determination information at least comprises one indication of the following: proxy connection indication, and indication prohibiting the signaling being used to indicate the home eNB gateway to release the context of the user equipment from being sent to the home eNB gateway.

## Patentansprüche

1. Freigabeverfahren für einen Benutzereinheitenkontext, **dadurch gekennzeichnet, dass** es umfasst:
Bestimmen, durch eine Quell-Funkbasisstation, eNB, ob von einem Gateway der Heimatfunkbasisstation gesendete Informationen zur Bestimmung der Gateway-Freigabe empfangen wurden, nachdem die Benutzereinheit den Handover beendet;
wenn die Quell-Funkbasisstation die Informationen zur Bestimmung der Gateway-Freigabe empfangen hat, Untersagen des Sendens einer Signalisierung, die verwendet wird, um dem Gateway der Heimatfunkbasisstation anzuzeigen, den Kontext der Benutzereinheit davon freizugeben, an das Gateway der Heimatfunkbasisstation;
**dadurch gekennzeichnet, dass** das Gateway der Heimatfunkbasisstation eine X2-Nachricht zur Freigabe von Benutzereinheitenkontext empfängt; und wenn die von der Quell-Funkbasisstation gesendete Signalisierung, die dem Gateway der Heimatfunkbasisstation anzeigt, Kontext der Benutzereinheit freizugeben, nicht empfangen wird, das Gateway der Heimatfunkbasisstation den Kontext der Benutzereinheit gemäß der empfangenen X2-Nachricht zur Freigabe von Benutzereinheitenkontext freigibt.

2. Verfahren nach Anspruch 1, **dadurch gekennzeichnet, dass**, bevor die Quell-Funkbasisstation bestimmt, ob die vom Gateway der Heimatfunkbasisstation gesendeten Informationen zur Bestimmung der Gateway-Freigabe empfangen wurden, die Quell-Funkbasisstation die Informationen zur Bestimmung der Gateway-Freigabe empfängt, wobei eine Art des Empfangens der Informationen zur Bestimmung der Gateway-Freigabe der Quell-Funkbasisstation umfasst: Empfangen einer Nachricht zur Freigabe von Benutzereinheitenkontext oder einer vom Gateway der Heimatfunkbasisstation an die Quell-Funkbasisstation gesendeten Nachricht zur Bestätigung einer Handover-Anfrage, wobei die Nachricht zur Freigabe von Benutzereinheitenkontext oder die Nachricht zur Bestätigung einer Handover-Anfrage die Informationen zur Bestimmung der Gateway-Freigabe trägt.

3. Verfahren nach Anspruch 2, **dadurch gekennzeichnet, dass**,
wenn die Quell-Funkbasisstation eine Proxy-X2-Schnittstelle mit einer Ziel-Funkbasisstation über das Gateway der Heimatfunkbasisstation einrichtet, das Gateway der Heimatfunkbasisstation, das die Nachricht zur Freigabe von Benutzereinheitenkontext oder die Nachricht zur Bestätigung einer Handover-Anfrage sendet und die Informationen zur Bestimmung der Gateway-Freigabe an die Quell-Funkbasisstation trägt, umfasst: Empfangen am Gateway der Heimatfunkbasisstation der Nachricht zur Freigabe von Benutzereinheitenkontext oder der Nachricht zur Bestätigung einer Handover-Anfrage, die von der Ziel-Funkbasisstation gesendet wurde; Hinzufügen durch das Gateway der Heimatfunkbasisstation der Informationen zur Bestimmung der Gateway-Freigabe zur Nachricht zur Freigabe von Benutzereinheitenkontext oder zur Nachricht zur Bestätigung einer Handover-Anfrage und Senden an die Quell-Funkbasisstation der Nachricht zur Freigabe von Benutzereinheitenkontext oder der Nachricht zur Bestätigung einer Handover-Anfrage, wie den Informationen zur Bestimmung der Gateway-Freigabe hinzugefügt wird; oder
wenn die Quell-Funkbasisstation eine Proxy-X2-Schnittstelle zur Ziel-Funkbasisstation über das Gateway einrichtet, das Gateway der Heimatfunkbasisstation, das die Nachricht zur Freigabe von Benutzereinheitenkontext oder die Nachricht zur Bestätigung einer Handover-Anfrage, die die Informationen zur Bestimmung der Gateway-Freigabe an die Quell-Funkbasisstation trägt, sendet, umfasst: Weiterleiten durch das Gateway der Heimatfunkbasisstation an die Quell-Funkbasisstation der Nachricht zur Freigabe von Benutzereinheitenkontext oder der Nachricht zur Bestätigung einer Handover-Anfrage, die die Informationen zur Bestimmung der Gateway-Freigabe trägt und von der Ziel-Funkbasisstation gesendet wird.

4. Verfahren nach einem der Ansprüche 1 bis 3, **dadurch gekennzeichnet, dass** die Informationen zur Bestimmung der Gateway-Freigabe mindestens eine Anzeige von Folgendem enthalten: Proxy-Verbindungsanzeige und Anzeige, die es untersagt, dass die Signalisierung verwendet wird, um dem Gateway der Heimatfunkbasisstation anzuzeigen, den Kontext der Benutzereinheit davon freizugeben, an das Gateway der Heimatfunkbasisstation gesendet zu werden.

5. Funkbasisstation, eNB, **dadurch gekennzeichnet, dass** sie umfasst:
ein Bestimmungsmodul, das konfiguriert ist, um zu bestimmen, ob von einem Gateway der Heimatfunkbasisstation gesendete Informationen zur Bestimmung der Gateway-Freigabe empfangen wurden, nachdem die Benutzereinheit das Handover beendet;
ein Verarbeitungsmodul, das konfiguriert ist, um, wenn das Bestimmungsmodul bestimmt, dass die vom Gateway der Heimatfunkbasisstation gesendeten Informationen zur Bestimmung der Gateway-Freigabe empfangen wurden, es einer Quell-Funkbasisstation untersagt, an das Gateway der Heimatfunkbasisstation eine Signalisierung zu senden, die verwendet wird, um dem Gateway der Heimatfunkbasisstation anzuzeigen, den Kontext der Benutzereinheit freizugeben;
**dadurch gekennzeichnet, dass** das Gateway der Heimatfunkbasisstation konfiguriert ist, um eine X2-Nachricht zur Freigabe von Benutzereinheitenkontext zu empfangen; und das Gateway der Heimatfunkbasisstation weiter konfiguriert ist, um, wenn die Signalisierung, die dem Gateway der Heimatfunkbasisstation anzeigt, den von der Quell-Funkbasisstation gesendeten Kontext der Benutzereinheit freizugeben, nicht erhalten wird, den Kontext der Benutzereinheit gemäß der empfangenen X2-Nachricht zur Freigabe von Benutzereinheitenkontext freizugeben.

6. Funkbasisstation nach Anspruch 5, **dadurch gekennzeichnet, dass** sie weiter umfasst:
ein Empfangsmodul, das konfiguriert ist, um die vom Gateway der Heimatfunkbasisstation gesendeten Informationen zur Bestimmung der Gateway-Freigabe zu empfangen, wobei eine Art des Empfangens der vom Gateway der Heimatfunkbasisstation gesendeten Informationen zur Bestimmung der Gateway-Freigabe der Quell-Funkbasisstation umfasst: Empfangen einer Nachricht zur Freigabe von Benutzereinheitenkontext oder einer vom Gateway der Heimatfunkbasisstation an die Quell-Funkbasisstation gesendeten Nachricht zur Bestätigung einer Handover-Anfrage, wobei die Nachricht zur Freigabe von Benutzereinheitenkontext oder die Nachricht zur Bestätigung einer Handover-Anfrage die Informationen zur Bestimmung der Gateway-Freigabe trägt.

7. Funkbasisstation nach Anspruch 5 oder 6, **dadurch gekennzeichnet, dass** die Informationen zur Bestimmung der Gateway-Freigabe mindestens eine Anzeige von Folgendem enthalten: Proxy-Verbindungsanzeige und Anzeige, die es untersagt, dass die Signalisierung verwendet wird, um dem Gateway der Heimatfunkbasisstation anzuzeigen, den Kontext der Benutzereinheit davon freizugeben, an das Gateway der Heimatfunkbasisstation gesendet zu werden.

8. Gateway der Heimat-Funkbasisstation, eNB, **dadurch gekennzeichnet, dass** es umfasst:
ein erstes Sendemodul, das konfiguriert ist, um an eine Quell-Funkbasisstation eine Nachricht zur Freigabe von Benutzereinheitenkontext zu senden, die Informationen zur Bestimmung der Gateway-Freigabe trägt;
ein zweites Sendemodul, das konfiguriert ist, um an die Quell-Funkbasisstation eine Nachricht zur Bestätigung einer Handover-Anfrage zu senden, die die Informationen zur Bestimmung der Gateway-Freigabe trägt;
**dadurch gekennzeichnet, dass** das Gateway der Heimatfunkbasisstation konfiguriert ist, um eine X2-Nachricht zur Freigabe von Benutzereinheitenkontext zu empfangen; und das Gateway der Heimatfunkbasisstation weiter konfiguriert ist, um, wenn eine Signalisierung, die dem Gateway der Heimatfunkbasisstation anzeigt, von der Quell-Funkbasisstation gesendeten Kontext der Benutzereinheit freizugeben, nicht empfangen wird, den Kontext der Benutzereinheit gemäß der empfangenen X2-Nachricht zur Freigabe von Benutzereinheitenkontext freizugeben.

9. Gateway der Heimat-Funkbasisstation, eNB, nach Anspruch 8, **dadurch gekennzeichnet, dass** das erste Sendemodul umfasst:
eine erste Empfangseinheit, die konfiguriert ist, um die von einer Ziel-Funkbasisstation gesendete Nachricht zur Freigabe von Benutzereinheitenkontext zu empfangen;
eine zweite Sendeeinheit, die konfiguriert ist, um die Informationen zur Bestimmung der Gateway-Freigabe zur Nachricht zur Freigabe von Benutzereinheitenkontext hinzuzufügen, wenn die Quell-Funkbasisstation eine Proxy-X2-Schnittstelle zur Ziel-Funkbasisstation über das Gateway der Heimatfunkbasisstation einrichtet, und um an die Quell-Funkbasisstation die Nachricht zur Freigabe von Benutzereinheitenkontext zu senden, die zu den Informationen zur Bestimmung der Gateway-Freigabe hinzugefügt wird; oder
eine zweite Sendeeinheit, die konfiguriert ist, um an die Quell-Funkbasisstation die Nachricht zur Freigabe von Benutzereinheitenkontext, die die Informationen zur Bestimmung der Gateway-Freigabe trägt und von der Ziel-Funkbasisstation gesendet wird, weiterzuleiten, wenn die Quell-Funkbasisstation eine Proxy-X2-Schnittstelle zur Ziel-Funkbasisstation über das Gateway einrichtet.

10. Gateway der Heimatfunkbasisstation nach Anspruch 8, **dadurch gekennzeichnet, dass** das zweite Sendemodul umfasst:
eine zweite Empfangseinheit, die konfiguriert ist, um die von einer Ziel-Funkbasisstation gesendete Nachricht zur Bestätigung einer Handover-Anfrage zu empfangen;
eine dritte Sendeeinheit, die konfiguriert ist, um die Informationen zur Bestimmung der Gateway-Freigabe zur Nachricht zur Bestätigung einer Handover-Anfrage hinzuzufügen, wenn die Quell-Funkbasisstation eine Proxy-X2-Schnittstelle zur Ziel-Funkbasisstation über das Gateway der Heimatfunkbasisstation einreichtet, und um an die Quell-Funkbasisstation die Nachricht zur Bestätigung einer Handover-Anfrage zu senden, die zu den Informationen zur Bestimmung der Gateway-Freigabe hinzugefügt wird; oder
eine vierte Sendeeinheit, die konfiguriert ist, um an die Quell-Funkbasisstation die Nachricht zur Bestätigung einer Handover-Anfrage, die die Informationen zur Bestimmung der Gateway-Freigabe trägt und von der Ziel-Funkbasisstation gesendet wird, weiterzuleiten, wenn die Quell-Funkbasisstation eine Proxy-X2-Schnittstelle zur Ziel-Funkbasisstation über das Gateway einrichtet.

11. Gateway der Heimatfunkbasisstation nach einem der Ansprüche 8 bis 10, **dadurch gekennzeichnet, dass** die Informationen zur Bestimmung der Gateway-Freigabe mindestens eine Anzeige von Folgendem enthalten: Proxy-Verbindungsanzeige und Anzeige, die es untersagt, dass die Signalisierung verwendet wird, um dem Gateway der Heimatfunkbasisstation anzuzeigen, den Kontext der Benutzereinheit davon freizugeben, an das Gateway der Heimatfunkbasisstation gesendet zu werden.

## Revendications

1. Procédé de libération de contexte d'équipement d'utilisateur, UE, **caractérisé en ce qu'**il comprend :
le fait de déterminer par un noeud B évolué, eNB, source si des informations de détermination de libération de passerelle, envoyées depuis une passerelle d'eNB domestique, ont été reçues après qu'un équipement d'utilisateur a fini un transfert intercellulaire ;
si l'eNB source a reçu les informations de détermination de libération de passerelle, le fait d'empêcher l'envoi d'une signalisation, qui est utilisée pour indiquer à la passerelle d'eNB domestique de libérer le contexte de l'équipement d'utilisateur, à la passerelle d'eNB domestique ;
**caractérisé en ce que** la passerelle d'eNB domestique reçoit un message de libération de contexte d'UE X2 ; et lorsque la signalisation indiquant à la passerelle d'eNB domestique de libérer le contexte de l'équipement d'utilisateur envoyée par l'eNB source n'est pas reçue, la passerelle d'eNB domestique libère le contexte de l'équipement d'utilisateur selon le message de libération de contexte d'UE X2 reçu.

2. Procédé selon la revendication 1, **caractérisé en ce que**, avant que l'eNB source détermine si les informations de détermination de libération de passerelle envoyées depuis la passerelle d'eNB domestique ont été reçues, l'eNB source reçoit les informations de détermination de libération de passerelle, dans lequel une manière de l'eNB source de recevoir les informations de détermination de libération de passerelle comprend : la réception d'un message de libération de contexte d'UE ou d'un message d'accusé de réception de demande de transfert intercellulaire envoyé de la passerelle d'eNB domestique à l'eNB source, dans lequel le message de libération de contexte d'UE ou le message d'accusé de réception de demande de transfert intercellulaire transporte les informations de détermination de libération de passerelle.

3. Procédé selon la revendication 2, **caractérisé en ce que**
si l'eNB source établit une interface X2 de serveur mandataire avec un eNB cible via la passerelle d'eNB domestique, l'envoi par la passerelle d'eNB domestique du message de libération de contexte d'UE ou du message d'accusé de réception de demande de transfert intercellulaire, transportant les informations de détermination de libération de passerelle, à l'eNB source comprend : la réception, par la passerelle d'eNB domestique, du message de libération de contexte d'UE ou du message d'accusé de réception de demande de transfert intercellulaire envoyé par l'eNB cible ; l'ajout, par la passerelle d'eNB domestique, des informations de détermination de libération de passerelle au message de libération de contexte d'UE ou au message d'accusé de réception de demande de transfert intercellulaire, et l'envoi à l'eNB source du message de libération de contexte d'UE ou du message d'accusé de réception de demande de transfert intercellulaire, qui est ajouté aux informations de détermination de libération de passerelle ; ou
si l'eNB source établit une interface X2 de serveur mandataire avec l'eNB cible via la passerelle, l'envoi par la passerelle d'eNB domestique du message de libération de contexte d'UE ou du message d'accusé de réception de demande de transfert intercellulaire, transportant les informations de détermination de libération de passerelle, à l'eNB source comprend : l'acheminement par la passerelle d'eNB domestique à l'eNB source du message de libération de contexte d'UE ou du message d'accusé de réception de demande de transfert intercellulaire qui transporte les informations de détermination de libération de passerelle et est envoyé par l'eNB cible.

4. Procédé selon l'une quelconque des revendications précédentes 1 à 3, **caractérisé en ce que** les informations de détermination de libération de passerelle comprennent au moins une indication de ce qui suit : une indication de connexion par serveur mandataire et une indication empêchant l'envoi de la signalisation, étant utilisée pour indiquer à la passerelle d'eNB domestique de libérer le contexte de l'équipement d'utilisateur, à la passerelle d'eNB domestique.

5. Noeud B évolué, eNB, **caractérisé en ce qu'**il comprend :
un module de détermination, configuré pour déterminer si des informations de détermination de libération de passerelle envoyées depuis une passerelle d'eNB domestique ont été reçues après qu'un équipement d'utilisateur a fini un transfert intercellulaire ;
un module de traitement, configuré pour empêcher, dans un cas où le module de détermination détermine que les informations de détermination de libération de passerelle envoyées depuis la passerelle d'eNB domestique ont été reçues, qu'un eNB source envoie à la passerelle d'eNB domestique une signalisation étant utilisée pour indiquer à la passerelle d'eNB domestique de libérer un contexte de l'équipement d'utilisateur ;
**caractérisé en ce que** la passerelle d'eNB domestique est configurée pour recevoir un message de libération de contexte d'UE X2 ; et la passerelle d'eNB domestique est en outre configurée pour, lorsque la signalisation indiquant à la passerelle d'eNB domestique de libérer le contexte de l'équipement d'utilisateur envoyée par l'eNB source n'est pas reçue, libérer le contexte de l'équipement d'utilisateur selon le message de libération de contexte d'UE X2 reçu.

6. eNB, selon la revendication 5, **caractérisé en ce qu'**il comprend en outre :
un module de réception, configuré pour recevoir les informations de détermination de libération de passerelle envoyées par la passerelle d'eNB domestique, dans lequel une manière de recevoir les informations de détermination de libération de passerelle envoyées par la passerelle d'eNB domestique comprend : la réception d'un message de libération de contexte d'UE ou d'un message d'accusé de réception de demande de transfert intercellulaire envoyé de la passerelle d'eNB domestique à l'eNB source, dans lequel le message de libération de contexte d'UE ou le message d'accusé de réception de demande de transfert intercellulaire transporte les informations de détermination de libération de passerelle.

7. eNB, selon la revendication 5 ou 6, **caractérisé en ce que** les informations de détermination de libération de passerelle comprennent au moins une indication de ce qui suit : une indication de connexion par serveur mandataire et une indication empêchant l'envoi de la signalisation, étant utilisée pour indiquer à la passerelle d'eNB domestique de libérer le contexte de l'équipement d'utilisateur, à la passerelle d'eNB domestique.

8. Passerelle de noeud B évolué, eNB, domestique, **caractérisée en ce qu'**elle comprend :
un premier module d'envoi, configuré pour envoyer à un eNB source un message de libération de contexte d'UE transportant des informations de détermination de libération de passerelle ;
un second module d'envoi, configuré pour envoyer à l'eNB source un message d'accusé de réception de demande de transfert intercellulaire transportant les informations de détermination de libération de passerelle ;
**caractérisée en ce que** la passerelle d'eNB domestique est configurée pour recevoir un message de libération de contexte d'UE X2 ; et la passerelle d'eNB domestique est en outre configurée pour, lorsqu'une signalisation indiquant à la passerelle d'eNB domestique de libérer un contexte de l'équipement d'utilisateur envoyée par l'eNB source n'est pas reçue, libérer le contexte de l'équipement d'utilisateur selon le message de libération de contexte d'UE X2 reçu.

9. Passerelle de noeud B évolué, eNB, domestique selon la revendication 8, **caractérisée en ce que** le premier module d'envoi comprend :
une première unité de réception, configurée pour recevoir le message de libération de contexte d'UE envoyé par un eNB cible ;
une première unité d'envoi, configurée pour ajouter les informations de détermination de libération de passerelle au message de libération de contexte d'UE lorsque l'eNB source établit une interface X2 de serveur mandataire avec l'eNB cible via la passerelle d'eNB domestique, et envoyer à l'eNB source le message de libération de contexte d'UE qui est ajouté aux informations de détermination de libération de passerelle ; ou
une deuxième unité d'envoi, configurée pour acheminer à l'eNB source le message de libération de contexte d'UE qui transporte les informations de détermination de libération de passerelle et est envoyé par l'eNB cible, lorsque l'eNB source établit une interface X2 de serveur mandataire avec l'eNB cible via la passerelle.

10. Passerelle d'eNB domestique selon la revendication 8, **caractérisée en ce que** le second module d'envoi comprend :
une seconde unité de réception, configurée pour recevoir le message d'accusé de réception de demande de transfert intercellulaire envoyé par un eNB cible ;
une troisième unité d'envoi, configurée pour ajouter les informations de détermination de libération de passerelle au message d'accusé de réception de demande de transfert intercellulaire, lorsque l'eNB source établit une interface X2 de serveur mandataire avec l'eNB cible via la passerelle d'eNB domestique, et envoyer à l'eNB source le message d'accusé de réception de demande de transfert intercellulaire qui est ajouté aux informations de détermination de libération de passerelle ; ou
une quatrième unité d'envoi, configurée pour acheminer à l'eNB source le message d'accusé de réception de demande de transfert intercellulaire qui transporte les informations de détermination de libération de passerelle et est envoyé par l'eNB cible, lorsque l'eNB source établit une interface X2 de serveur mandataire avec l'eNB cible via la passerelle.

11. Passerelle d'eNB domestique selon l'une quelconque des revendications 8 à 10, **caractérisée en ce que** les informations de détermination de libération de passerelle comprennent au moins une indication de ce qui suit : une indication de connexion par serveur mandataire et une indication empêchant l'envoi de la signalisation, étant utilisée pour indiquer à la passerelle d'eNB domestique de libérer le contexte de l'équipement d'utilisateur, à la passerelle d'eNB domestique.
